# EUROPEAN PATENT APPLICATION

(11) **EP 4 166 358 A1**
(43) Date of publication of application: **19.04.2023**
(21) Application number: 21923596.7
(22) Date of filing: 27.08.2021
(51) Int. Cl.: B60C 23/04

(54) **WHEEL POSITION IDENTIFICATION SYSTEM AND WHEEL POSITION IDENTIFICATION DEVICE**

(71) Applicant: Pacific Industrial Co., Ltd., Ogaki-shi, Gifu-ken 503-8603 (JP)
(72) Inventor: OBATA Takahito, Ogaki-shi Gifu 5038603 (JP)
(74) Representative: Daub, Thomas
(86) International application number: PCT/JP2021/031438
(87) International publication number: WO 2023/026453

(57) **Abstract**

A wheel position identifying system (50) includes a receiver (71) and transmitters (51), which are respectively provided in two wheel assemblies (32, 35) of a wheel assembly set (31). When each transmitter (51) detects that it is located at a specific position in a rotation direction of the wheel assembly (32, 35), the transmitter (51) transmits a wireless signal including an identification information. A wireless signal transmitted by the transmitter (51) provided in the outer wheel assembly (32) when the transmitter (51) detects the specific position is defined as a first wireless signal. A wireless signal transmitted by the transmitter (51) provided in the inner wheel assembly (35) when the transmitter (51) detects the specific position is defined as a second wireless signal. A receiver controlling device (72) of the receiver (71) identifies in which of the outer wheel assembly (32) and the inner wheel assembly (35) each transmitter (51) is provided based on the reception intervals of the first wireless signal and the second wireless signal.

## Description

### TECHNICAL FIELD

The present disclosure relates to a wheel position identifying system and a wheel position identifying device.

### BACKGROUND ART

Patent Literature 1 discloses a vehicle equipped with a wheel position identifying system. The vehicle includes wheel assemblies and rotation angle detecting devices. Each wheel assembly includes a wheel and a tire attached to the wheel. The rotation angle detecting device detects a rotation angle of the wheel assembly. The wheel position identifying system includes transmitters and a receiver. The transmitters are respectively provided in the wheel assemblies. Each transmitter transmits a wireless signal when the transmitter is located at a specific position in the rotation direction of the wheel assembly. When receiving the wireless signal, the receiver obtains a detection result of the rotation angle detecting device. The receiver identifies the wheel assembly to which each transmitter is attached based on variations of the rotation angles of the wheel assemblies at the time when the wireless signals are received.

### CITATION LIST

### Patent Literature

Patent Literature 1: Japanese Laid-Open Patent Publication No. 2014-227124

### SUMMARY OF INVENTION

### Technical Problem

Some vehicles are equipped with sets of wheel assemblies. A wheel assembly set includes two wheel assemblies. The two wheel assemblies in a wheel assembly set are attached to either end of an axle. In this case, it is desired to identify the wheel assemblies in which the respective wheel transmitters are provided in the wheel assembly set.

### Solution to Problem

In a first aspect of the present disclosure, a wheel position identifying system is provided that includes transmitters respectively provided in two wheel assemblies in a wheel assembly set of a vehicle, and a wheel position identifying device that is configured to identify whether each of the transmitters is provided in an outer wheel assembly or an inner wheel assembly of the two wheel assemblies. Each of the transmitters includes an acceleration sensor that is configured to detect an acceleration, a transmitter memory unit that is configured to store identification information, a transmission circuit that is configured to transmit a wireless signal containing the identification information to the wheel position identifying device, and a transmitter controlling device that is configured to cause the transmission circuit to transmit the wireless signal when detecting that the transmitter is located at a specific position in a rotation direction of the wheel assembly based on a detection result of the acceleration sensor. The wireless signal transmitted by the transmitter provided in the outer wheel assembly when the transmitter detects the specific position is defined as a first wireless signal. The wireless signal transmitted by the transmitter provided in the inner wheel assembly when the transmitter detects the specific position is defined as a second wireless signal. The transmitters are provided in the wheel assembly set such that a period from when the first wireless signal is transmitted to when the second wireless signal is transmitted is different from a period from when the second wireless signal is transmitted to when the first wireless signal is transmitted. The wheel position identifying device includes a reception circuit that is configured to receive the wireless signals, and a receiver controlling device. The receiver controlling device is configured to identify in which of the outer wheel assembly and the inner wheel assembly each transmitter is provided based on reception intervals of the first wireless signal and the second wireless signal.

The reception interval from when the first wireless signal is received to when the second wireless signal is received is different from the reception interval from when the second wireless signal is received to when the first received signal is received. It is possible to determine in advance which of these reception intervals will be longer based on the positions of the transmitters in relation to the wheel assembly set. This allows the receiver controlling device to identify in which of the outer wheel assembly and the inner wheel assembly each transmitter is provided based on the reception intervals of the first wireless signal and the second wireless signal.

In a second aspect of the present disclosure, a wheel position identifying device used with transmitters respectively provided in two wheel assemblies in a wheel assembly set of a vehicle is provided. The wheel position identifying device is configured to identify whether each of transmitters is provided in an outer wheel assembly or an inner wheel assembly of the two wheel assemblies. A wireless signal transmitted by the transmitter provided in the outer wheel assembly when the transmitter detects a specific position in a rotation direction of the wheel assembly is defined as a first wireless signal. The wireless signal transmitted by the transmitter provided in the inner wheel assembly when the transmitter detects the specific position is defined as a second wireless signal. The transmitters are provided in the wheel assembly set such that a period from when the first wireless signal is transmitted to when the second wireless signal is transmitted is different from a period from when the second wireless signal is transmitted to when the first wireless signal is transmitted. The wheel position identifying device includes a reception circuit that is configured to receive the wireless signals, and a receiver controlling device. The receiver controlling device is configured to identify in which of the outer wheel assembly and the inner wheel assembly each transmitter is provided based on reception intervals of the first wireless signal and the second wireless signal.

The reception interval from when the first wireless signal is received to when the second wireless signal is received is different from the reception interval from when the second wireless signal is received to when the first received signal is received. It is possible to determine in advance which of these reception intervals will be longer based on the positions of the transmitters in relation to the wheel assembly set. This allows the receiver controlling device to identify in which of the outer wheel assembly and the inner wheel assembly each transmitter is provided based on the reception intervals of the first wireless signal and the second wireless signal.

### BRIEF DESCRIPTION OF DRAWINGS

Fig. 1 is a schematic diagram showing a configuration of a vehicle.
Fig. 2 is a schematic diagram showing a transmitter mounted on each wheel assembly shown in Fig. 1.
Fig. 3 is a diagram schematically showing a positional relationship between two transmitters provided in each wheel assembly set shown in Fig. 1.
Fig. 4 is a flowchart showing a procedure in which the transmitter shown in Fig. 2 executes a specific position transmission process.
Fig. 5 is a diagram showing transmission intervals between a first wireless signal transmitted from a first transmitter and a second wireless signal transmitted from a second transmitter through a specific position transmission process shown in Fig. 4.
Fig. 6 is a flowchart of a wheel position identifying process executed by the receiver controlling device shown in Fig. 1.
Fig. 7 is a flowchart showing the inner-outer wheel position identification shown in Fig. 6.

### DESCRIPTION OF EMBODIMENTS

A wheel position identifying system and a wheel position identifying device according to one embodiment will now be described.

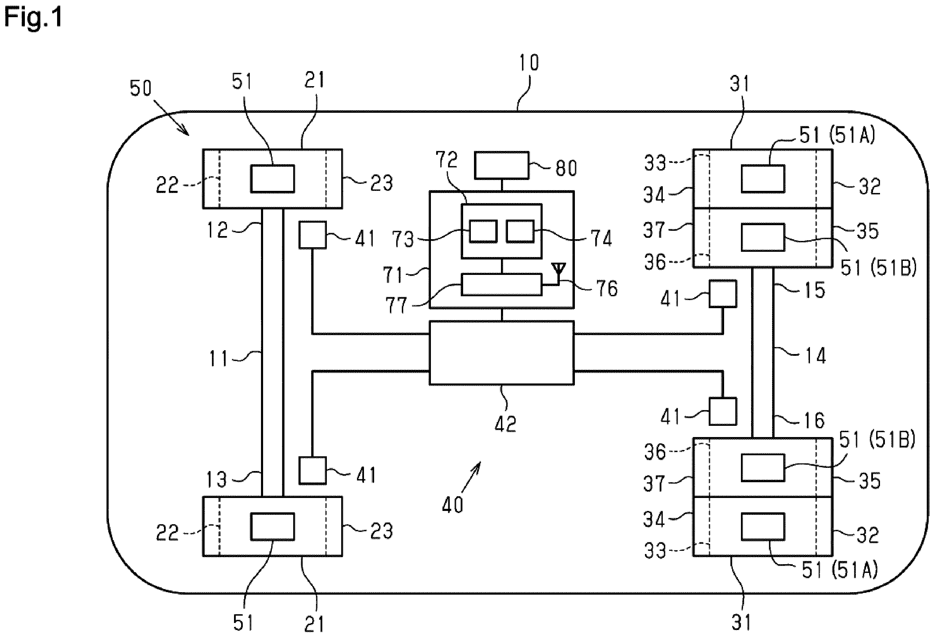

As shown in Fig. 1, a vehicle 10 includes axles 11, 14, wheel assemblies 21, wheel assembly sets 31, an ABS 40, and a display unit 80. In the following description, directional terms such as front, rear, left, and right are defined with reference to the vehicle 10.

The number of the axles 11, 14 is two. The two axles 11, 14 are arranged in a front-rear direction. The two axles 11, 14 are respectively referred to as a first axle 11 and a second axle 14. The first axle 11 is located forward of the second axle 14. Positions at opposite ends of the first axle 11 will be respectively referred to as a first position 12 and a second position 13. Positions at opposite ends of the second axle 14 will be respectively referred to as a third position 15 and a fourth position 16. The third position 15 is a position at the right end of the second axle 14. The fourth position 16 is a position at the left end of the second axle 14.

Each wheel assembly 21 includes a wheel 22 and a tire 23, which is attached to the wheel 22. Each of the first position 12 and the second position 13 is provided with one of the wheel assemblies 21. The wheel assemblies 21 has a single-tire structure. The single-tire structure refers to a structure in which a single wheel assembly 21 is attached to either end of the first axle 11.

Each wheel assembly set 31 includes two wheel assemblies 32, 35. The two wheel assemblies 32, 35 include an outer wheel assembly 32 and an inner wheel assembly 35. The outer wheel assembly 32 is located on the outer side of the inner wheel assembly 35 in the vehicle width direction. The outer wheel assembly 32 includes a wheel 33 and a tire 34, which is attached to the wheel 33. The inner wheel assembly 35 includes a wheel 36 and a tire 37, which is attached to the wheel 36. Each of the third position 15 and the fourth position 16 is provided with one of the wheel assembly sets 31. Each wheel assembly set 31 has a double-tire structure. The double-tire structure refers to a structure in which two wheel assemblies 32, 35 are attached to either end of the axle 11, 14.

The ABS 40 is an antilock braking system. The ABS 40 includes rotation angle detecting units 41 and an ABS controller 42. The rotation angle detecting units 41 are respectively located at the first position 12 to the fourth position 16. Each of the wheel assemblies 21 and the wheel assembly sets 31 is provided with one of the rotation angle detecting units 41. The rotation angle detecting units 41 are respectively arranged to face gears that are provided to rotate integrally with the wheel assemblies 21 and the wheel assembly sets 31. When the gear rotates, the rotation angle detecting unit 41 generates pulses. While any of the wheel assemblies 21 and the wheel assembly sets 31 rotates one turn, the corresponding rotation angle detecting unit 41 generates pulses of which the number corresponds to the number of teeth of the gear.

The ABS controller 42 includes, for example, a microcomputer. The ABS controller 42 counts pulses of each rotation angle detecting unit 41. The ABS controller 42 counts rising edges and falling edges of the pulses. The ABS controller 42 calculates, as a pulse count value, the remainder when the counted number of pulses is divided by the number of pulses per rotation of the gear. The degree of rotation of the gear per pulse count value is obtained by dividing 360 degrees by the number of pulses generated while the gear rotates one turn. In this manner, the rotation angle of each wheel assembly 21 and each wheel assembly set 31 is obtained from the pulse count value. The pulse count value is information that indicates the rotation angle of each wheel assembly 21 and each wheel assembly set 31. The rotation angles of the wheel assemblies 21 and the wheel assembly sets 31 can be regarded as the rotation angles of the wheels 22, 33, 36. In the same wheel assembly set 31, the rotation angles of the wheel 33 and the wheel 36 are equal to each other. The pulse count value is from 0 to 95 in the present embodiment.

The vehicle 10 includes a wheel position identifying system 50. The wheel position identifying system 50 includes transmitters 51 and a receiver 71. The transmitters 51 are respectively provided in the wheel assemblies 21, 32, 35. The transmitters 51 are integrally provided, for example, in tire valves to be attached to the wheels 22, 33, 36. The transmitter 51 provided in the wheel 33 can be regarded as being provided in the outer wheel assembly 32. The transmitter 51 provided in the wheel 36 can be regarded as being provided in the inner wheel assembly 35.

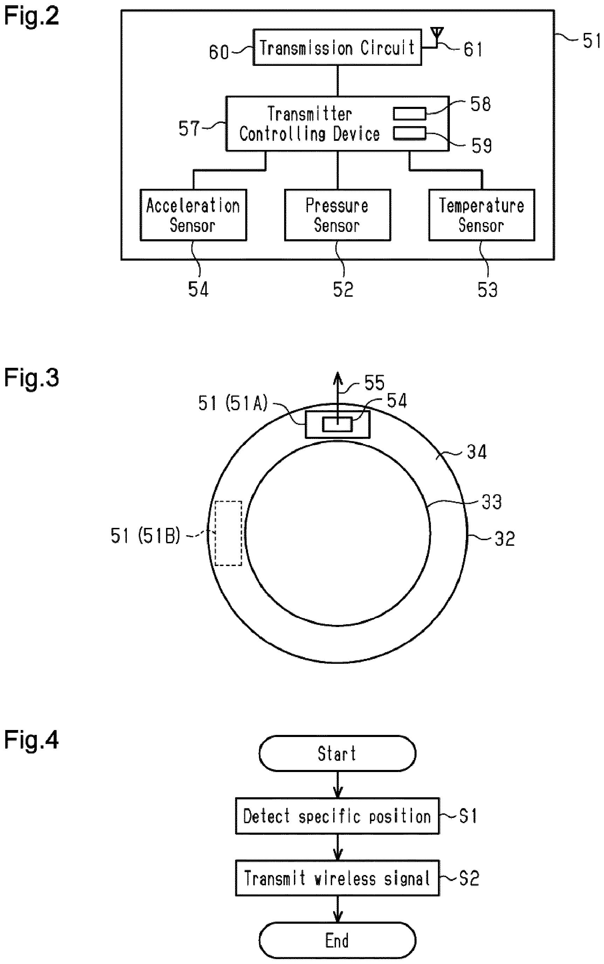

As shown in Fig. 2, each transmitter 51 includes a pressure sensor 52, a temperature sensor 53, an acceleration sensor 54, a transmitter controlling device 57, a transmission circuit 60, and a transmission antenna 61.

The pressure sensor 52 detects the pressure of the corresponding one of the tires 23, 34, 37. The temperature sensor 53 detects the temperature inside the corresponding one of the tires 23, 34, 37.

As shown in Fig. 3, the acceleration sensor 54 has a detection axis 55. The acceleration sensor 54 detects an acceleration in a direction along the detection axis 55. The acceleration sensor 54 of the present embodiment is a uniaxial acceleration sensor. The acceleration sensor 54 is arranged to detect a centrifugal acceleration. In the present embodiment, the acceleration sensor 54 is arranged such that, when the transmitter 51 is at the lowest position in the wheel assembly 21, 32, 35, the detection axis 55 of the acceleration sensor 54 is oriented vertically downward.

As shown in Fig. 2, the transmitter controlling device 57 includes a processor 58 and a transmitter memory unit 59. The processor 58 may be a micro processing unit (MPU), a central processing unit (CPU), or a digital signal processor (DSP). The transmitter memory unit 59 includes a random-access memory (RAM) and a read-only memory (ROM). The transmitter memory unit 59 stores program codes or commands configured to cause the processor 58 to execute processes. The transmitter controlling device 57 may include a hardware circuit such as an ASIC and an FPGA. The transmitter controlling device 57, which is processing circuitry, may include one or more processors that operate according to a computer program, one or more hardware circuits such as an ASIC and an FPGA, or a combination thereof. The ROM and the RAM, which are computer-readable media, include any type of media that are accessible by general-purpose computers and dedicated computers. The transmitter memory unit 59 stores an ID code indicating individual identification information of the corresponding transmitters 51.

The transmitter controlling device 57 generates transmission data. The transmission data is digital data and is data of binary numbers. The transmission data includes pressure data, temperature data, and an ID code. The pressure data is data indicating the pressure detected by the pressure sensor 52. The temperature data is data indicating the temperature detected by the temperature sensor 53. The transmitter controlling device 57 delivers transmission data to the transmission circuit 60.

The transmission circuit 60 transmits a wireless signal, which has been modulated in accordance with the transmission data from the transmitter controlling device 57, from the transmission antenna 61. This causes the transmission circuit 60 to transmit a wireless signal including the ID code. The wireless signal is a signal of a predetermined frequency band. The frequency band may be an LF band, an MF band, an HF band, a VHF band, a UHF band, and a 2.4 GHz band. The transmitter controlling device 57 executes a steady-state transmission process and a specific position transmission process. In the steady-state transmission process, wireless signals are transmitted from the transmission circuit 60 at predetermined intervals.

The specific position transmission process is executed when the vehicle 10 starts traveling after the vehicle 10 has been in a stopped state for a predetermined period of time. The predetermined period of time is set to, for example, several tens of minutes to several hours. Whether the vehicle 10 is traveling can be determined based on acceleration detected by the acceleration sensor 54. The centrifugal acceleration acting on the acceleration sensor 54 increases as the vehicle speed increases. If the acceleration detected by the acceleration sensor 54 is greater than or equal to a travel determination threshold, the transmitter controlling device 57 determines that the vehicle 10 is traveling. If the acceleration detected by the acceleration sensor 54 is lower than the travel determination threshold, the transmitter controlling device 57 determines that the vehicle 10 is in a stopped state. The travel determination threshold is set to a value greater than the acceleration detected by the acceleration sensor 54 when the vehicle 10 is in a stopped state, while taking factors such as tolerances into consideration. A process executed by the transmitter controlling device 57 when executing the specific position transmission process will now be described.

As shown in Fig. 4, in step S1, the transmitter controlling device 57 detects that the transmitter 51 is located at a specific position in the rotation direction of the wheel 22, 33, 36. More specifically, the transmitter controlling device 57 detects that a predetermined time has elapsed from the preceding transmission of a wireless signal and that the transmitter 51 is located at the specific position. The rotation direction of the wheel 22, 33, 36 can be regarded as the rotation direction of the wheel assembly 21, 32, 35. It is possible to detect that the transmitter 51 is at the specific position based on the acceleration detected by the acceleration sensor 54. A centrifugal acceleration and a gravitational acceleration act on the detection axis 55. The gravitational acceleration always acts downward in the vertical direction. The orientation of the detection axis 55 changes as the wheel 22, 33, 36 rotates. Thus, a gravitational acceleration component detected by the acceleration sensor 54 varies as the wheel 22, 33, 36 rotates. Unless the vehicle 10 is abruptly accelerated or abruptly stopped, the centrifugal acceleration changes only slightly during one turn of the wheel 22, 33, 36. Therefore, changes in the acceleration detected by the acceleration sensor 54 during one turn of the wheel 22, 33, 36 can be substantially regarded as changes in the gravitational acceleration component due to changes in the orientation of the detection axis 55.

When only the gravitational acceleration is considered, the gravitational acceleration component detected by the acceleration sensor 54 changes in a range between +1 [G] and -1 [G] in one rotation of the wheel 22, 33, 36. The gravitational acceleration component detected when the detection axis 55 is oriented vertically downward is +1 [G]. The gravitational acceleration component detected when the detection axis 55 is oriented vertically upward, which is the direction opposite to the vertically downward direction, is -1 [G]. When rotation of the wheel 22, 33, 36 changes the position of the acceleration sensor 54, such that the detection axis 55 passes the position of the vertically upward orientation, the acceleration detected by the acceleration sensor 54 is switched from decreasing to increasing. Specifically, when the position of the acceleration sensor 54 changes from a position at which the detection axis 55 is oriented vertically downward to a position at which the detection axis 55 is oriented vertically upward, the acceleration detected by the acceleration sensor 54 decreases. In contrast, when the position of the acceleration sensor 54 changes from a position at which the detection axis 55 is oriented vertically upward to a position at which the detection axis 55 is oriented vertically downward, the acceleration detected by the acceleration sensor 54 increases. The transmitter controlling device 57 obtains the detection result of the acceleration sensor 54 at predetermined intervals. Each time the detection result of the acceleration sensor 54 is obtained, the transmitter controlling device 57 compares the obtained detection with the preceding value. A case in which the detection result of the acceleration sensor 54 has increased from the preceding value is defined as an increase, and a case in which the detection result of the acceleration sensor 54 has decreased from the preceding value is defined as a decrease. When a pattern of decrease and increase agrees with a specified pattern, the transmitter controlling device 57 determines that the transmitter 51 is located at the specific position at the wheel 22, 33, 36. For example, when the detection result of the acceleration sensor 54 starts increasing after decreasing, the transmitter controlling device 57 determines that the transmitters 51 is at the specific position. Accordingly, the transmitter controlling device 57 detects that the transmitters 51 is at the specific position. The specific position in the rotation direction of the wheel 22, 33, 36 can be regarded as a specific position in the rotation direction of the wheel assembly 21, 32, 35.

Next, in step S2, the transmitter controlling device 57 transmits a wireless signal from the transmission circuit 60. In this manner, the use of the acceleration sensor 54 allows the transmitter controlling device 57 to transmit a wireless signal from the transmission circuit 60 when detecting that the transmitter 51 is at the specific position in the wheel 22, 33, 36. The specific position in the present embodiment is a position at which the detection axis 55 is oriented vertically upward. The specific position corresponds to a predetermined range that allows a margin of error. Due to various factors, the position of the transmitter 51 when the transmitter controlling device 57 detects the specific position typically has errors. Various factors include the frequency at which the transmitter controlling device 57 obtains the detection result of the acceleration sensor 54 and detection errors of the acceleration sensor 54. The specific position permits these errors. The specific position can be regarded as a specific range that includes permissible range permitting errors.

As shown in Fig. 3, the transmitter 51 provided in the outer wheel assembly 32 will be referred to as a first transmitter 51A, and the transmitter 51 provided in the inner wheel assembly 35 will be referred to as a second transmitter 51B. A wireless signal transmitted by the first transmitter 51A when the first transmitter 51A detects the specific position is defined as a first wireless signal, and a wireless signal transmitted by the second transmitter 51B when the second transmitter 51B detects the specific position is defined as a second wireless signal. The transmitters 51 are provided in the wheel assembly set 31 such that a period from when the first wireless signal is transmitted to when the second wireless signal is transmitted is different from a period from when the second wireless signal is transmitted to when the first wireless signal is transmitted. The first transmitter 51A and the second transmitter 51B are separated from each other in the rotation direction of the wheel assembly set 31. The first transmitter 51A and the second transmitter 51B are separated from each other in the rotation direction of the wheel assembly set 31 by an angle other than 180°. In the present embodiment, the first transmitter 51A and the second transmitter 51B are separated from each other in the rotation direction of the wheel assembly set 31 by 90°. When the first transmitter 51A is at the highest position in the outer wheel assembly 32, the second transmitter 51B is at a front position in the inner wheel assembly 35.

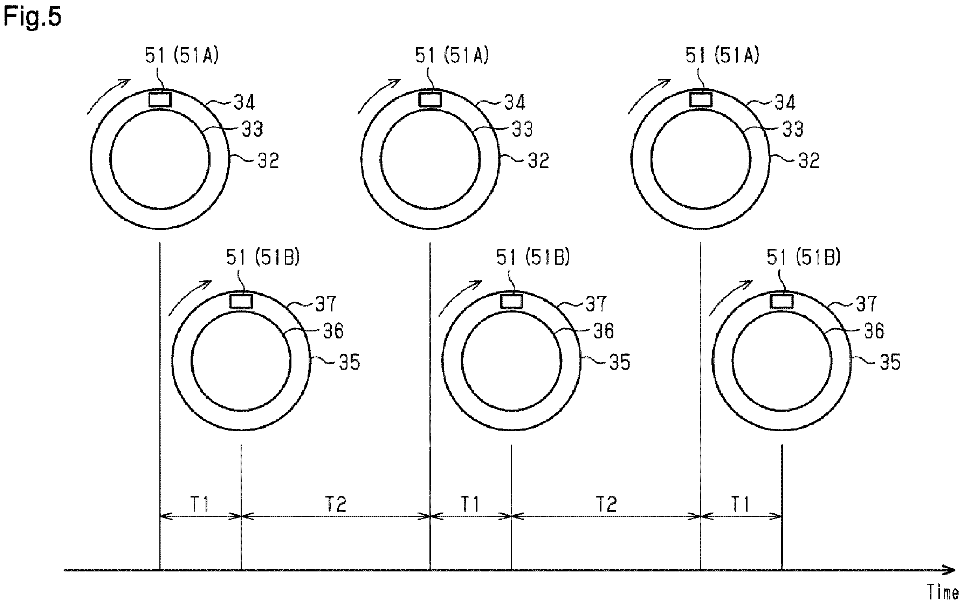

With reference to Fig. 5, a period from when the first transmitter 51A is at the highest position to when the second transmitter 51B is at the highest position is defined as a first period T1. A period from when the second transmitter 51B is at the highest position to when the first transmitter 51A is at the highest position is defined as a second period T2. For illustrative purposes, the vehicle 10 is assumed to be advancing at a constant speed. The first period T1 is shorter than the second period T2. The first period T1 can be regarded as a period from when the first wireless signal is transmitted to when the second wireless signal is transmitted. The second period T2 can be regarded as a period from when the second wireless signal is transmitted to when the first wireless signal is transmitted.

As shown in Fig. 1, the receiver 71 includes a receiver controlling device 72, a reception antenna 76, and a reception circuit 77. The receiver 71 is mounted on the vehicle 10.

The receiver controlling device 72 includes a processor 73 and a memory unit 74. The processor 73 may be, for example, an MPU, a CPU, or a DSP. The memory unit 74 includes a nonvolatile memory medium that can be rewritten, a ROM, and a RAM. The memory unit 74 stores program codes or commands configured to cause the processor 73 to execute processes. The receiver controlling device 72 may include a hardware circuit such as an ASIC and an FPGA. The receiver controlling device 72, which is processing circuitry, may include one or more processors that operate according to a computer program, one or more hardware circuits such as an ASIC and an FPGA, or a combination thereof. The ROM and the RAM, which are computer-readable media, include any type of media that are accessible by general-purpose computers and dedicated computers. The receiver controlling device 72 is configured to obtain pulse count values from the ABS controller 42.

The reception antenna 76 receives wireless signals transmitted from the transmitters 51. The reception circuit 77 demodulates the wireless signals received through the reception antenna 76 to obtain transmission data. The reception circuit 77 outputs the transmission data to the receiver controlling device 72. The receiver controlling device 72 thus obtains pressure data, temperature data, and ID codes. When there is an anomaly in any of the tires 23, 34, 37, the receiver controlling device 72 performs a notification using the display unit 80. The display unit 80 is located in the view of occupants of the vehicle 10.

The receiver controlling device 72 executes a wheel position identifying process. The wheel position identifying process is a process for associating the respective wheels 22, 33, 36 with the ID codes of the respective transmitters 51. Associating the respective wheels 22, 33, 36 with the ID codes of the respective the transmitters 51 can be regarded as associating the respective wheel assemblies 21, 32, 35 with the ID codes of the respective transmitters 51. Associating the respective wheels 22, 33, 36 with the ID codes of the respective the transmitters 51 can be regarded as identifying in which one of the six wheels 22, 33, 36 each of the six transmitters 51 is provided. Associating the respective wheels 22, 33, 36 with the ID codes of the respective transmitters 51 allows the receiver controlling device 72 to display, on the display unit 80, the pressures of the tires 23, 34, 37 in association with the positions of the wheels 22, 33, 36. Also, when an anomaly occurs in any of the tires 23, 34, 37, the receiver controlling device 72 can display, on the display unit 80, the position of the tire 23, 34, 37 in which the anomaly has occurred. The wheel position identifying process is executed, for example, when the vehicle 10 is switched from a stopped state to an activated state through an operation of a start switch. The start switch is also referred to as an ignition switch. Hereinafter, wireless signals are assumed to be transmitted through the specific position transmission process.

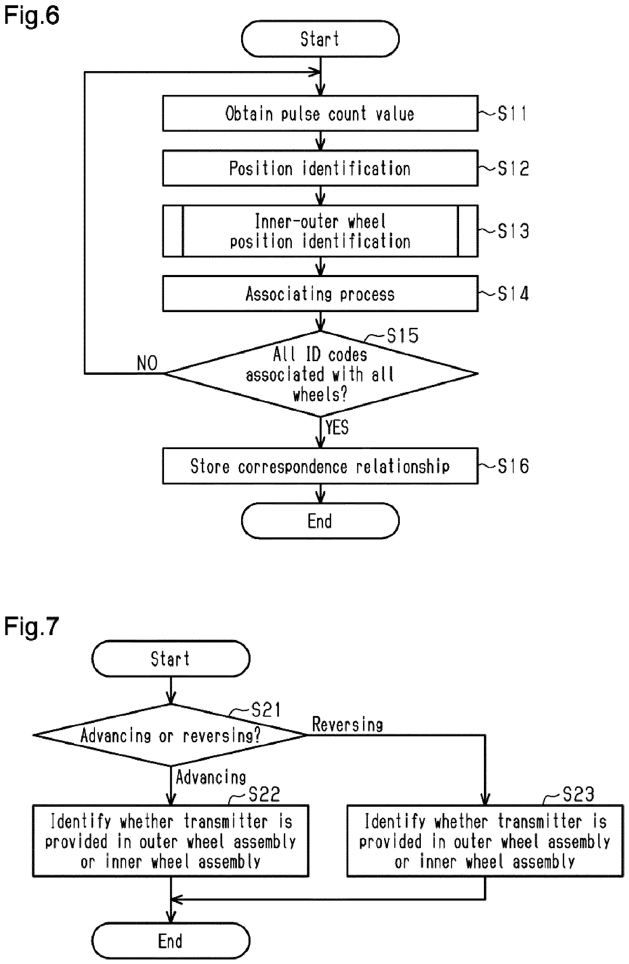

As shown in Fig. 6, each time the reception circuit 77 receives a wireless signal in step S11, the receiver controlling device 72 obtains the pulse count value of each rotation angle detecting unit 41 from the ABS controller 42. Accordingly, each time wireless signals from the six transmitters 51 are received, the pulse count values of the four rotation angle detecting units 41 are obtained.

Next, in step S12, the receiver controlling device 72 performs position identification. The position identification is a process that identifies at which of the first position 12 to the fourth position 16 each the six transmitters 51 is provided. In other words, the position identification is a process of determining to which of the two wheel assemblies 21 and the two wheel assembly sets 31 each of the six transmitters 51 is attached.

The position identification is performed by obtaining the pulse count value each time a wireless signal is received. The rotation speeds of the wheel assemblies 21 and the wheel assembly sets 31 differ, for example, due to the influence of a differential gear. Thus, the relative positions of the transmitters 51 change as the vehicle 10 travels. In a case in which the transmitters 51 transmit wireless signals at the specific positions, and pulse count values are obtained upon reception of the wireless signals, one of the rotation angle detecting units 41 has a small variation of the pulse count value in correspondence with each transmitter 51. Based on variations of the pulse count values, which are collected each time a wireless signal is obtained, it is possible to identify at which of the first position 12 to the fourth position 16 each of the six transmitters 51 is provided. In other words, the ID codes of the six transmitters 51 can be associated with the first position 12 to the fourth position 16.

Next, in step S13, the receiver controlling device 72 performs inner-outer wheel position identification. The position identification identifies at which of the first position 12 to the fourth position 16 each of the six transmitters 51 is provided. Since the wheel assemblies 21 of a single-tire structure are attached to the first position 12 and the second position 13, one ID code is associated with each of the first position 12 and the second position 13. The wheel assembly sets 31 of a double-tire structure are attached to the third position 15 and the fourth position 16. Each wheel assembly set 31 includes two transmitters 51. Accordingly, two ID codes are associated with each of the third position 15 and the fourth position 16. The receiver controlling device 72 associates the two ID codes, which have been associated with the respective wheel assembly sets 31 through the inner-outer wheel position identification, with the wheel 33 and the wheel 36, respectively. The inner-outer wheel position identification is performed based on reception intervals between the first wireless signal and the second wireless signal.

As shown in Fig. 7, the receiver controlling device 72 determines whether the vehicle 10 is advancing or reversing in step S21. The receiver controlling device 72 determines whether the vehicle 10 is advancing or reversing by acquiring information that indicates the moving direction of the vehicle 10 from an electronic control unit mounted on the vehicle 10. For example, when the rotation angle detecting units 41 are detecting the rotation directions of the wheel assemblies 21 and the wheel assembly sets 31, it is possible to determine whether the vehicle 10 is advancing or reversing from the detection results of the rotation angle detecting units 41. Thus, the receiver controlling device 72 may determine whether the vehicle 10 is advancing or reversing by acquiring information related to the rotation directions of the wheel assemblies 21 and the wheel assembly sets 31 from the ABS controller 42, which is an electronic control unit. If it is determined that the vehicle 10 is advancing in step S21, the receiver controlling device 72 executes the process of step S22. If it is determined that the vehicle 10 is reversing in step S21, the receiver controlling device 72 executes the process of step S23.

In step S22, the receiver controlling device 72 identifies in which of the outer wheel assembly 32 and the inner wheel assembly 35 each transmitter 51 is provided based on the reception intervals of the first wireless signal and the second wireless signal. It is now assumed that the receiver controlling device 72 receives alternating wireless signals from the two transmitters 51 of the wheel assembly set 31 while the vehicle 10 is advancing. In this case, the reception interval from when the first wireless signal is received to when the second wireless signal is received agrees with or substantially agrees with the first period T1. The reception interval from when the second wireless signal is received to when the first wireless signal is received agrees with or substantially agrees with the second period T2. When the reception intervals of wireless signals including two ID codes are derived, two reception intervals of different lengths alternate. Comparison between each derived reception interval with the preceding reception interval reveals that a reception interval that is shorter than the preceding reception interval and a reception interval that is longer than the preceding reception interval alternate. The receiver controlling device 72 associates, with the outer wheel assembly 32, the ID code included in the wireless signal of which the reception interval from the preceding wireless signal is longer. The receiver controlling device 72 associates, with the inner wheel assembly 35, the ID code included in the wireless signal of which the reception interval from the preceding wireless signal is shorter. Each time a wireless signal is obtained, the receiver controlling device 72 may determine whether the ID code included in the wireless signal belongs to the first transmitter 51A or the second transmitter 51B. The receiver controlling device 72 may associate the ID code with the outer wheel assembly 32 or the inner wheel assembly 35 when the determination results of several cycles are the same.

In step S23, the receiver controlling device 72 identifies in which of the outer wheel assembly 32 and the inner wheel assembly 35 each transmitter 51 is provided based on the reception intervals of the first wireless signal and the second wireless signal. It is now assumed that the receiver controlling device 72 receives alternating wireless signals from the two transmitters 51 of the wheel assembly set 31 while the vehicle 10 is reversing. In this case, the reception interval from when the first wireless signal is received to when the second wireless signal is received agrees with or substantially agrees with the second period T2. The reception interval from when the second wireless signal is received to when the first wireless signal is received agrees with or substantially agrees with the first period T1. That is, the relationship between the lengths of the reception intervals is inverted from the case in which the vehicle 10 is advancing to the case in which the vehicle 10 is reversing. The receiver controlling device 72 associates, with the outer wheel assembly 32, the ID code included in the wireless signal of which the reception interval from the preceding wireless signal is shorter. The receiver controlling device 72 associates, with the inner wheel assembly 35, the ID code included in the wireless signal of which the reception interval from the preceding wireless signal is longer. Each time a wireless signal is obtained, the receiver controlling device 72 may determine whether the ID code included in the wireless signal belongs to the first transmitter 51A or the second transmitter 51B. The receiver controlling device 72 may associate the ID code with the outer wheel assembly 32 or the inner wheel assembly 35 when the determination results of several cycles are the same.

Next, in step S14, the receiver controlling device 72 associates the wheels 22, 33, 36 with the ID codes based on the result of the inner-outer wheel position identification as shown in Fig. 6. The wheels 22 and the ID codes are associated with each other through the position identification. Two ID codes are respectively associated with each wheel assembly set 31 through the position identification. The two ID codes that have been associated with the wheel assembly set 31 are each associated with the wheel 33 or the wheel 36 through the inner-outer wheel position identification.

Next, in step S15, the receiver controlling device 72 determines whether all the ID codes have been associated with all the wheels 22, 33, 36. If the determination result of step S15 is affirmative, the receiver controlling device 72 executes the process of step S16. If the determination result of step S15 is negative, the receiver controlling device 72 returns to executes the process of step S11. That is, the wheel position identifying process is repeated until all the ID codes are associated with all the wheels 22, 33, 36.

In step S16, the receiver controlling device 72 stores the correspondence relationship between the ID codes and the wheels 22, 33, 36 in the memory unit 74. When finishing the process of step S16, the receiver controlling device 72 ends the wheel position identifying process. The receiver 71, which executes the wheel position identifying process in the above-described manner, is a wheel position identifying device. The wheel position identifying method is performed by the receiver controlling device 72 executing the wheel position identifying process.

Operation of the present embodiment will now be described.

The reception interval from when the first wireless signal is received to when the second wireless signal is received is different from the reception interval from when the second wireless signal is received to when the first received signal is received. It is possible to determine in advance which of these reception intervals will be longer based on the positions of the transmitters 51 in relation to the wheel assembly set 31. In the present embodiment, when the vehicle 10 is advancing, the reception interval from when the first wireless signal is received to when the second wireless signal is received is shorter than the reception interval from when the second wireless signal is received to when the first received signal is received. The relationship between the lengths of the reception intervals is inverted when the vehicle 10 reverses. The receiver controlling device 72 can perform the inner-outer wheel position identification based on the reception intervals between the first wireless signal and the second wireless signal.

The present embodiment has the following advantages.
(1) The receiver controlling device 72 can identify in which of the outer wheel assembly 32 and the inner wheel assembly 35 each transmitter 51 is provided based on the reception intervals of the first wireless signal and the second wireless signal. Thus, even though the vehicle 10 includes the wheel assembly sets 31, the transmitters 51 can be associated with the respective wheel assemblies 32, 35.
(2) A uniaxial acceleration sensor is used as the acceleration sensor 54. This reduces the manufacturing costs as compared to a case in which a dual-axial acceleration sensor or a triple-axial acceleration sensor is used.

The above-described embodiment may be modified as follows. The above-described embodiment and the following modifications can be combined as long as the combined modifications remain technically consistent with each other.

If it is known which of the first position 12 to the fourth position 16 each transmitter 51 is provided in, the receiver controlling device 72 may perform the inner-outer wheel position identification without performing the position identification.

The position identification may be performed by using initiators that correspond to the first position 12 to the fourth position 16. In this case, each initiator transmits a wireless signal to the corresponding transmitter 51. The transmitter 51 transmits a response signal to the receiver 71 in response to the wireless signal from the initiator. Based on the response signals, the receiver 71 respectively associates the six transmitters 51 with the first position 12 to the fourth position 16. Only one initiator may be provided in the vehicle 10. In this case, each transmitter 51 transmits, to the receiver 71, a wireless signal including a received signal strength of the wireless signal transmitted by the initiator. Based on the received signal strengths, the receiver 71 respectively associates the six transmitters 51 with the first position 12 to the fourth position 16.

The wheel position identifying process may be performed only when the vehicle 10 is advancing. In this case, the receiver controlling device 72 does not execute the process of step S23.

The first position 12 and the second position 13 may also be provided with wheel assembly sets 31. Even in this case, the method of the above-described embodiment allows the receiver controlling device 72 to identify which of the outer wheel assembly 32 and the inner wheel assembly 35 each transmitter 51 is provided in.

The acceleration sensor 54 may be a dual-axis acceleration sensor or a triple-axis acceleration sensor.

The transmitters 51 may be adhered to the tires 23, 34, 37. In this case, the transmitter 51 adhered to the tire 34 is regarded as being provided in the outer wheel assembly 32. The transmitter 51 adhered to the tire 37 is regarded as being provided in the inner wheel assembly 35.

The specific position may be a position at which the detection axis 55 is oriented vertically downward. In this case, when the detection result of the acceleration sensor 54 starts decreasing after increasing, the transmitter controlling device 57 determines that the transmitter 51 is at the specific position.

The receiver controlling device 72 may perform the inner-outer wheel position identification when changes in the speed of the vehicle 10 are small. The reception interval between the first wireless signal and the second wireless signal changes in correspondence with the speed of the vehicle 10. In order to reduce the influence of the speed of the vehicle 10, the receiver controlling device 72 may perform the inner-outer wheel position identification based on the first wireless signal and the second wireless signal that are obtained when changes in the speed of the vehicle 10 are in a permissible range. Information indicating the speed of the vehicle 10 can be obtained, for example, from the ABS controller 42.

The identification information may be protocols. If the transmitters 51 have different protocols, the transmitters 51 can be identified by obtaining the protocols from the transmission data. The identification information may be data that is included in the transmission data and allows an ID code to be derived. For example, if an error detection code included in the transmission data is calculated using an ID code, the ID code can be derived from the error detection code. In this manner, the identification information may indirectly indicate the ID code.

### REFERENCE SIGNS LIST

10... Vehicle; 31 ...Wheel Assembly Set; 32...Outer Wheel Assembly; 35...Inner Wheel Assembly; 50...Wheel Position Identifying System; 51...Transmitter; 54...Acceleration Sensor; 57...Transmitter Controlling Device; 59...Transmitter Memory Unit; 60...Transmission Circuit; 71 ...Receiver as Wheel Position Identifying Device 72...Receiver Controlling Device; 77...Reception Circuit

## Claims

1. A wheel position identifying system, comprising:
transmitters respectively provided in two wheel assemblies in a wheel assembly set of a vehicle; and
a wheel position identifying device that is configured to identify whether each of the transmitters is provided in an outer wheel assembly or an inner wheel assembly of the two wheel assemblies, wherein
each of the transmitters includes:
an acceleration sensor that is configured to detect an acceleration;
a transmitter memory unit that is configured to store identification information;
a transmission circuit that is configured to transmit a wireless signal containing the identification information to the wheel position identifying device; and
a transmitter controlling device that is configured to cause the transmission circuit to transmit the wireless signal when detecting that the transmitter is located at a specific position in a rotation direction of the wheel
assembly based on a detection result of the acceleration sensor,
the wireless signal transmitted by the transmitter provided in the outer wheel assembly when the transmitter detects the specific position is defined as a first wireless signal,
the wireless signal transmitted by the transmitter provided in the inner wheel assembly when the transmitter detects the specific position is defined as a second wireless signal,
the transmitters are provided in the wheel assembly set such that a period from when the first wireless signal is transmitted to when the second wireless signal is transmitted is different from a period from when the second wireless signal is transmitted to when the first wireless signal is transmitted,
the wheel position identifying device includes:
a reception circuit that is configured to receive the wireless signals; and
a receiver controlling device, and
the receiver controlling device is configured to identify in which of the outer wheel assembly and the inner wheel assembly each transmitter is provided based on reception intervals of the first wireless signal and the second wireless signal.

2. A wheel position identifying device used with transmitters respectively provided in two wheel assemblies in a wheel assembly set of a vehicle, the wheel position identifying device being configured to identify whether each of transmitters is provided in an outer wheel assembly or an inner wheel assembly of the two wheel assemblies, wherein
a wireless signal transmitted by the transmitter provided in the outer wheel assembly when the transmitter detects a specific position in a rotation direction of the wheel assembly is defined as a first wireless signal,
the wireless signal transmitted by the transmitter provided in the inner wheel assembly when the transmitter detects the specific position is defined as a second wireless signal,
the transmitters are provided in the wheel assembly set such that a period from when the first wireless signal is transmitted to when the second wireless signal is transmitted is different from a period from when the second wireless signal is transmitted to when the first wireless signal is transmitted,
the wheel position identifying device comprises:
a reception circuit that is configured to receive the wireless signals; and
a receiver controlling device, and
the receiver controlling device is configured to identify in which of the outer wheel assembly and the inner wheel assembly each transmitter is provided based on reception intervals of the first wireless signal and the second wireless signal.
